**Europäisches Patentamt**

**European Patent Office**

**Office européen des brevets**

(19)

(11) Veröffentlichungsnummer : **0 191 116 B2**

(12) **NEUE EUROPÄISCHE PATENTSCHRIFT**

(45) Veröffentlichungstag der neuen Patentschrift :
**15.07.92 Patentblatt 92/29**

(51) Int. Cl.⁵ : **B65G 37/02,** B23Q 7/14,
**B62D 65/00**

(21) Anmeldenummer : **85101383.9**

(22) Anmeldetag : **09.02.85**

(54) Verfahren zum Transportieren und Zentrieren eines Fahrzeugs sowie Fördereinrichtung hierzu.

(43) Veröffentlichungstag der Anmeldung :
**20.08.86 Patentblatt 86/34**

(45) Bekanntmachung des Hinweises auf die
Patenterteilung :
**10.08.88 Patentblatt 88/32**

(45) Bekanntmachung des Hinweises auf die
Entscheidung über den Einspruch :
**15.07.92 Patentblatt 92/29**

(84) Benannte Vertragsstaaten :
**DE FR IT**

(56) Entgegenhaltungen :
**DE-A- 2 100 842**
**DE-A- 2 358 498**
**DE-A- 3 147 784**
**DE-A- 3 316 050**
**DE-B- 3 130 024**

(73) Patentinhaber : **CARL SCHENCK AG**
**Landwehrstrasse 55 Postfach 40 18**
**W-6100 Darmstadt (DE)**

(72) Erfinder : **Schaller, Helmut**
**Kreisstrasse 47**
**W-6108 Weiterstadt 1 (DE)**
Erfinder : **Walz, Reinhold, Dipl.-Ing.**
**Carl-Ulrich-Strasse 28-36**
**W-6100 Darmstadt-Eberstadt (DE)**

(74) Vertreter : **Dallhammer, Herbert, Dipl.-Ing.**
**CARL SCHENCK AG Patentabteilung Postfach**
**4018 Landwehrstrasse 55**
**W-6100 Darmstadt (DE)**

EP 0 191 116 B2

Jouve, 18, rue Saint-Denis, 75001 PARIS

## Beschreibung

Die Erfindung betrifft ein Verfahren und eine Fördereinrichtung zum Transportieren und Zentrieren eines auf einem antreibbaren Skid befindlichen Fahrzeugs.

Die Montage von Kraftfahrzeugen aus einzelnen Bauteilen und Baugruppen geschieht im allgemeinen auf Förderbahnen, an denen einzelne Bearbeitungsstationen angeordnet sind. Das Fahrzeug wird mittels Fördereinrichtungen von einer zur anderen Bearbeitungsstation transportiert und beispielsweise nach Einbau einer Baugruppe in das Fahrzeug mittels derselben Fördereinrichtung weitertransportiert. Als Beispiel für die genannten Fördervorrichtungen für eine Transferstraße wird die DE-PS 31 47 784 genannt, bei der der Förderschlitten oder -skid das zu bewegende Gut trägt und wobei der Förderschlitten selbst mittels eines Zahnriemens bewegt wird. Die Verbindung zwischen zu transportierendem Bauteil und Skid geschieht über einen Mitnehmerbolzen.

Bei der Herstellung von Serienprodukten, beispielsweise Automobilen, ist die Genauigkeit der Positionierung zu der Bearbeitungsstation, an der eine Person oder auch ein Industrieroboter vorhanden ist, eine zwingende Voraussetzung für ausschußfreies Arbeiten. Zwangsläufig erfordert ein Positionieren in Bruchteilen von Millimetern einen beachtlichen Zeitaufwand. Bis das Bauteil vom Skid getrennt, anschließend positioniert und nach der Bearbeitung aus der Position heraus wieder mit dem Skid verbunden ist, um dann mit Hilfe dieses Skids über eine Förderbahn zur nächsten Bearbeitungsstelle transportiert werden zu können.

Dieser durch die genaue Positionierung hervorgerufene Zeitverlust wirkt sich negativ auf die Durchsatzleistung der Transferstraße aus, so daß in der vorgegebenen Zeiteinheit weniger fertige Bauteile am Ende der Transferstraße weitergegeben werden können. Es ist offensichtlich, daß hieraus eine Verringerung der Kapazität resultiert. Ausgehend hiervon liegt der vorliegenden Erfindung die Aufgabe zugrunde, bei vorgegebener Zentriergenauigkeit am Bearbeitungsplatz die Transportzeit und die Zeit für die Zentrierung zu verkürzen. Diese Aufgabe wird in den kennzeichnenden Merkmalen des Verfahrensanspruchs 1 gelöst. Durch die schwimmende Lagerung des Bauteils in einer bestimmten Lage zum Skid und durch die federnd unterstützte Zentrierung des Bauteils, die gleichzeitig nach Beendigung der Bearbeitung die ursprünglich eingenommene schwimmende Lagerung des Bauteils zum Skid in einer bestimmten Lage ermöglicht und durch den Transport des Skids in Preßlage wird die der Erfindung zugrundeliegende Aufgabe, die an sich widersprüchliche Forderungen stellt, nämlich bei vorgegebener hoher Zentriergenauigkeit, die an sich verhältnismäßig lange Zeit beansprucht, und die Transportgeschwindigkeit zu erhöhen, die an sich eine sehr ungenaue Zentrierung mit sich bringt, überraschenderweise gelöst.

Zur Durchführung des Verfahrens wird ausgehend von einer Fördereinrichtung mit Fahrbahnen für Skids, integrierten Bearbeitungsstationen mit Arretiervorrichtungen für Skids und einem Antrieb für Skids diese erfindungsgemäß nach dem kennzeichnenden Merkmal des Anspruchs 2 ausgestaltet. Zufolge federnder Aufnahme eines Innenrahmens in dem Skid, auf dem das Bauteil zentriert aufgenommen wird und durch Antreiben des Skids über einen sich am Skid abwälzenden Antrieb und einer sich am Skid abwälzenden Gegenhalterung wird eine Fördereinrichtung geschaffen, die den Forderungen im Hinblick auf Schnelligkeit, Zentriergenauigkeit und geringer Störanfälligkeit entspricht. Ebenso ist es mit Hilfe des in der Fördereinrichtung angeordneten abwälzbaren Antriebs einschließlich abwälzbarer Gegenhalterung möglich, Gruppen von Skids mit einem einzigen Antrieb taktweise zur nächsten Bearbeitungsstation vorzuschieben, als auch am Ende der Transferstraße durch einen weiteren abwälzbaren Antrieb die Gruppe von Skids aufzulösen, dergestalt, daß dieser abwälzbare Antrieb und die diesem gegenüberliegende abwälzbare Gegenhalterung mit erhöhter Geschwindigkeit den jeweils in seinem Bereich befindlichen Skid abtransportiert.

Die in Anspruch 3 unter Schutz gestellte federnde Abstützung des Innenrahmens gegen den Skid ermöglichen es, daß der Innenrahmen mit dem auf diesem befindlichen Bauteil in einer bestimmten Lage zum Skid angeordnet ist und gleichzeitig bei Beschleunigung oder Verzögerung stark gedämpft dieser Bewegung folgen kann.

Die in Anspruch 4 unter Schutz gestellte Antriebsstation ermöglicht es, in einer Preßlage den Skid mit hoher Beschleunigung in Bewegung zu setzen oder ihn aus hoher Geschwindigkeit auf kürzestem Wege genau abzubremsen, ohne daß ein Ausweichen des Skids, was zu einer unkontrollierten Bewegung im Hinblick auf einen vorgegebenen Haltepunkt führen würde, auftritt. Als am Skid abwälzbare Antriebe und Gegenhalterungen sind über Zahnriemen oder Ketten angetriebene Rollen oder Zahnriemen selbst oder Ketten mit Gummizähnen verwendbar. Die Ansprüche 5 und 6 stellen derartige Ausgestaltungen unter Schutz.

Die erfindungsgemäße Ausgestaltung der Aufnahme mit Federn, Anspruch 7, gewährt bei federnder Lagerung des Innenrahmens eine eindeutige Lage zum Skid beizubehalten. Als federnde Elemente sind verwendbar Gummi, Kunststoff, Stahlfedern oder Kombinationen dieser.

Wird, wie in Anspruch 8 unter Schutz gestellt, die Seitenwandung jeder Aufnahme nach unten konisch ausgestaltet, ist eine Aufnahme des Innenrahmens durch den diesen umgebenden Skid ohne zusätzliche Hilfseinrichtungen möglich und zwar sowohl beim Trennen zwischen Innenrahmen vom Skid und beim Zusammenführen von Innenrahmen mit Skid.

Die in Anspruch 9 unter Schutz gestellte Verschraubung der Aufnahmen mit dem Skid ermöglichen es, den Skid auch für andere Zwecke zu verwenden, bei denen der Antrieb pressend von oben und unten den Skid umfaßt. Die Ansprüche 10 und 11 stellen eine verschweißte Ausgestaltung der Aufnahmen unter Schutz und auch ein Verschweißen der verschweißten Aufnahmen mit dem Skid. Derartiges bietet sich an, wenn die Skids nicht austauschbar sein sollen.

Die Ausgestaltung der Erfindung nach Anspruch 12 ermöglicht es, daß auch schwere Bauteile vom Innenrahmen sicher getragen werden können, ohne daß eine Verwindung und damit ein Mangel in der Zentriergenauigkeit auftritt.

In den Ansprüchen 13 und 14 werden Fahrhilfen für den Skid unter Schutz gestellt, die an diesem angeordnet sind, während Anspruch 15 eine Fahrhilfe an der Fahrbahn unter Schutz stellt, wenn der Skid beispielsweise ohne Fahrhilfen über eine Rollenbahn gefördert wird. Es ist jedoch ein beliebiger Austausch zwischen den Fahrhilfen am Skid und an der Fahrbahn möglich.

Das erfinderische Verfahren und die erfinderische Vorrichtung sind erfindungsgemäß verwendbar bei am Hallenboden oder an der Hallendecke oder an einer Seitenwand abgestützten Fahrbahnen.

In der nachfolgenden Zeichnung wird die Erfindung an einer am Boden bzw. an einer Decke abgestützten Fahrbahn beispielhaft näher erläutert.

Es zeigen:

Fig. 1a eine Fahrbahn mit Skid in Seitenansicht

Fig. 1b dieselbe Fahrbahn in Draufsicht

Fig. 2a einen Skid mit Innenrahmen in Draufsicht

Fig. 2b einen Skid mit Innenrahmen im Schnitt

Fig. 2c in vergrößertem Maßstab eine Aufnahme in Seitenansicht

Fig. 2d in vergrößertem Maßstab dieselbe Aufnahme im Schnitt

Fig. 3 eine Zentrierstation an einer Bearbeitungsstelle in der Transferstraße

Fig. 4 eine an einer Decke abgestützte Fahrbahn mit Skid.

In den Figuren werden dieselben Bauteile mit denselben Bezugsziffern bezeichnet.

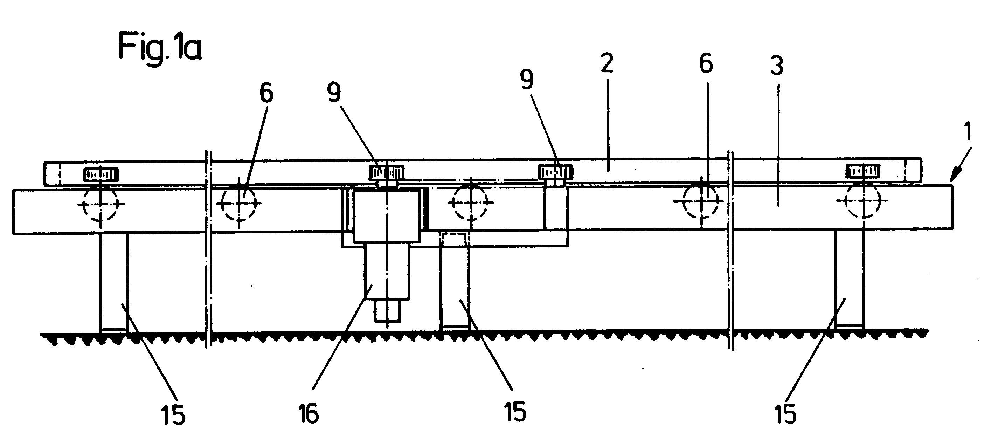

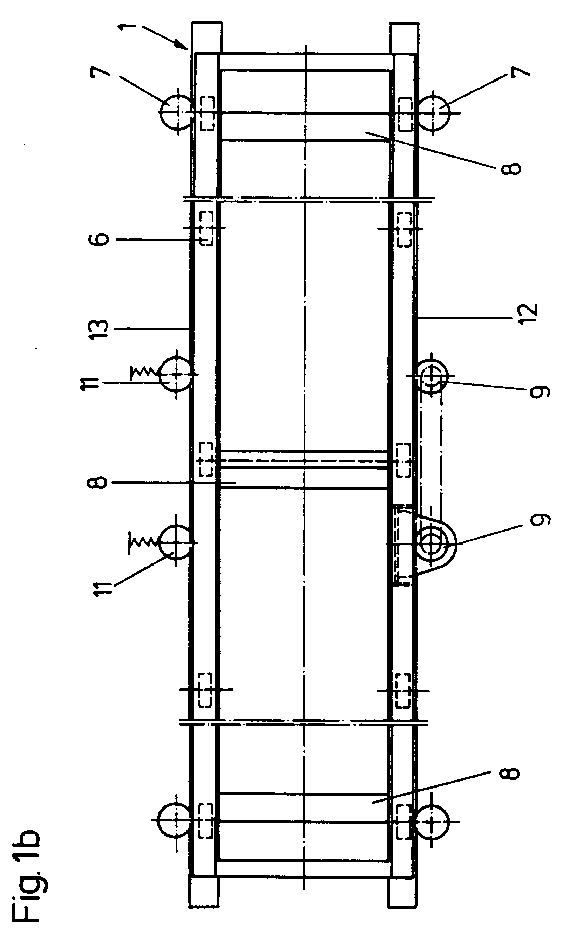

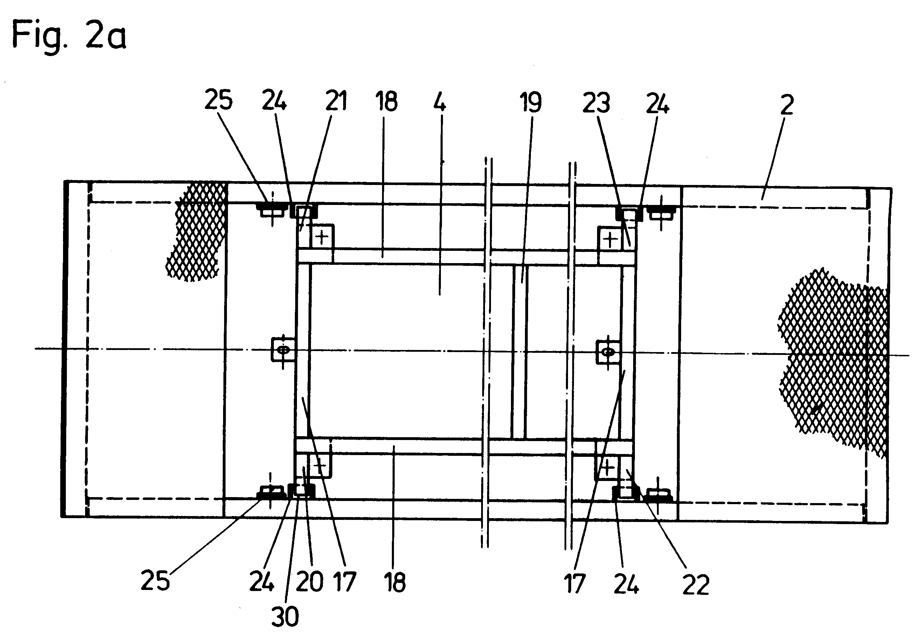

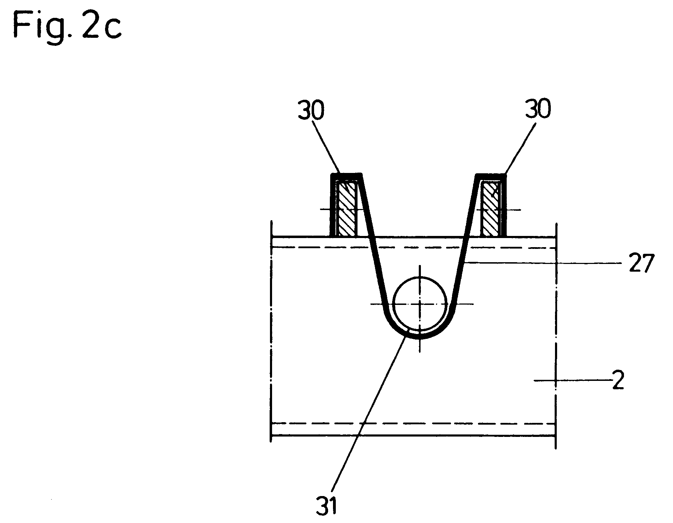

In Fig. 1a ist eine Fahrbahn 1 für Skids als Rollenbahn 3 ausgebildet, über die die Skids 2 beispielsweise mit einer Fördergeschwindigkeit von zwei Metern pro Sekunde bewegt werden. Der Skid 2, der einen Innenrahmen 4 trägt (vgl. Fig. 2a) wird über Rollen 6 entlang der Rollenbahn 3 bewegt. In Fig. 1b sind seitliche Führungsrollen 7 an der Fahrbahn 1 vorgesehen, durch die der Skid geführt entlang der Fahrbahn 1 transportiert werden kann. Der Skid 2 trägt erfindungsgemäß Querversteifungen 8 (vgl. Fig. 1b). Der Skid 2 wird im Ausführungsbeispiel angetrieben von zwei von einem mit einem Motor 16 zusammenwirkenden Zahnriemen angetriebenen Rollen 9, die sich an einer Längsseite 12 des Skids 2 abwälzen und abgefederten Gegenrollen 11, die sich als Gegenhalterung auf einer anderen Längsseite 13 des Skids 2 abwälzen. Anstelle des im Ausführungsbeispiel dargestellten Zahnriemenantriebs der Rollen 9 kann auch ein Antrieb über Ketten erfolgen, die von einem Motor angetrieben werden. Auch kann der Zahnriemen als abwälzbarer Antrieb sich direkt auf der Längsseite 12 abwälzen. Gleiches gilt für die Gegenrollen 11. Auch diese können beispielsweise durch einen federnd gelagerten Zahnriemen, der sich auf der Längsseite 13 abwälzt ersetzt werden. Ebenso ist eine Umkehrung in der federnden Abstützung möglich, dergestalt, daß die angetriebenen Rollen 9 federnd gelagert sind und die Gegenrollen 11 starr befestigt sind. Anstelle der dargestellten Rollen, können auch Zahnriemen allein verwendet werden

Die abwälzbare Gegenhalterung 11, die den Rollen 9 gegenüberliegt, ermöglicht es, ein Ausweichen der Skids bei Anpressung der Rollen 9 zu verhindern. Damit wird ermöglicht, die vollen Beschleunigungskräfte auf die Längsseiten 12, 13 der Skids zu übertragen.

Die Fahrbahn 1 steht gemäß Ausführungsbeispiel Fig. la auf Stützen 15 und es wird somit ermöglicht, daß ein Antriebsmotor 16, der beispielsweise als Getriebemotor ausgestaltet ist, nach unten hängend über den Zahnriemenantrieb die Rollen 9 antreibt, ohne daß die Oberseite des Skids 2 durch diesen Antriebsmotor unterbrochen wird. Eine derartige Ausgestaltung gibt insbesondere bei ausladenden Bauteilen eine größere Freiheit bei der Bearbeitung und eröffnet die Möglichkeit, den Antrieb der Rollen 9 und die sich abwälzenden Rollen 11 als Gegenhalterung an beliebigen Stellen der Fahrbahn anzuordnen, beispielsweise auch an der Stelle, an der ein Auflösen der schrittweise von Bearbeitungsstation zu Bearbeitungsstation transportierten Skids 2 in eine Einzelskidförderung stattfindet, ohne daß zusätzliche Umbauten erforderlich sind.

Der in den Fig. 2a bis d dargestellte Innenrahmen 4 besteht aus Querträgern 17 und Längsträgern 18. Zwischen den Längsträgern 18 ist im Ausführungsbeispiel noch eine zusätzliche Versteifung 19 vorgesehen zur Stabilisierung des Innenrahmens 4. Enden 20, 21 bzw. 22, 23 der Querträger 17 stützen sich in Aufnahmen 24, die am Skid 2 angeordnet sind, federnd ab. Die Aufnahmen können in diesem Falle aus Stahlfedern oder Gummifedern bestehen. Auch ist es möglich, eine Stahl-Gummi-Feder vorzusehen, bei der der Stahl im wesentlichen die Armierung darstellt.

Im Ausführungsbeispiel nach Fig. 2a trägt der Skid Bundrollen 25 und ist so mit über eine feste verlegte, nicht dargestellte, Schienenbahn bewegbar und zwar ebenfalls mit den vom Zahnriemenantrieb angetriebenen Rollen 9 und der abwälzbaren Gegenhalterung 11.

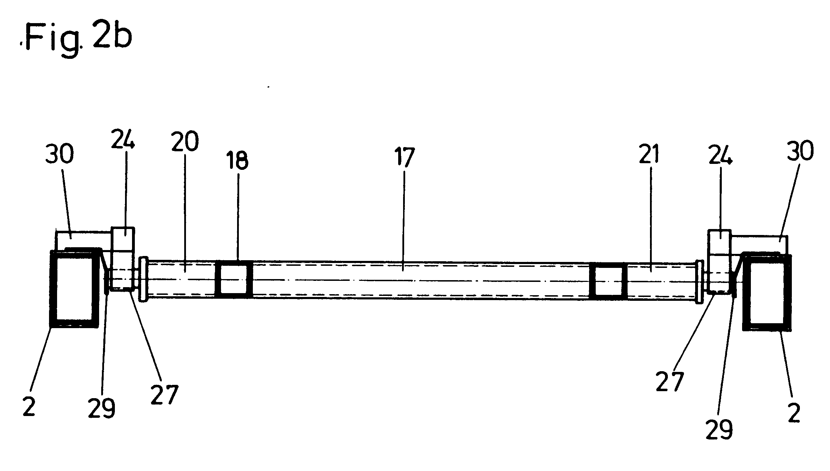

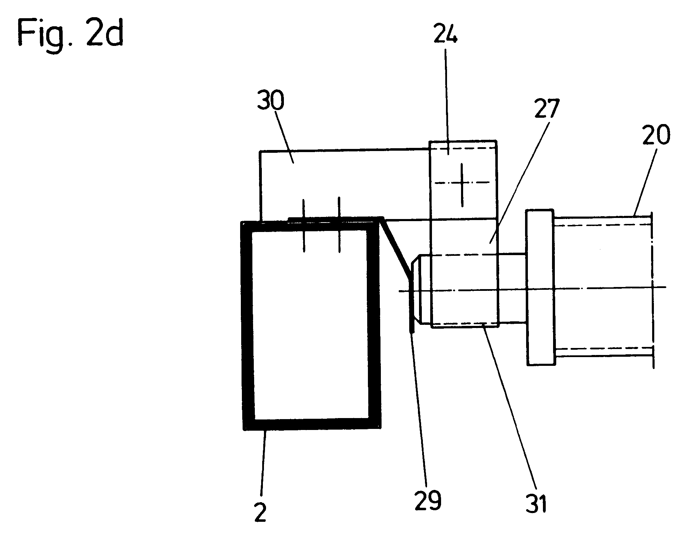

Der in Fig. 2b dargestellte Schnitt durch den Skid 2 zeigt, wie die Enden 20, 21 bzw. 22, 23 in den Aufnahmen 24, die am Skid 2 angeordnet sind, schwimmend gelagert sind. Federn 27 bilden die Seitenwände der Aufnahmen 24 während eine Querfeder 29 (vgl. Fig. 2d) sich als Rückwand konisch vom Skid 2, jedoch an der Aufnahme 24 befestigt, weg erstreckt. Die Querfeder 29 ist mit den Federn 27 nicht verbunden, sondern nur mit einer Halterung 30 der Aufnahme 24. Damit ist es möglich, daß sich bei Querbewegungen der Innenrahmen 4 schwimmend gegen die Querfeder 29 abstützt und bei Beschleunigungen oder Verzögerungen des Skids 2 in Förderrichtung eine schwimmende Lagerung des Innenrahmens durch die Federn 27 gewährleistet ist. Es kann der mit einem Bauteil versehene Skid somit sowohl den Beschleunigungen als auch den Verzögerungen gedämpft folgen, ohne daß die eingenommene Lage durch Zusammenprall der Rahmen gegeneinander verändert wird.

Trotz der schwimmenden Lagerung des Innenrahmens 4 ist diese in einer festen Bezugslage zum Skid 2 gelagert um bei dem Zentriervorgang mit geringstmöglichem Aufwand mit Hilfe der Federn 27 und 29 zentriert zu werden. Die ebenfalls konische Ausgestaltung der Federn 27 bis zu einem Aufnahmeboden 31 ermöglicht ein ruckfreies Ein- und Ausführen des Innenrahmens 4 aus den Aufnahmen 24. Die Halterung 30 ist mittels Verschrauben bei austauschbaren Skids 2 oder mittels Verschweißen bei fest zugeordneten Skids 2 mit dem jeweiligen Skid verbunden. Auch kann die Aufnahmekonstruktion, die aus Federn 27, einer Querfeder 29 und einem Aufnahmeboden 31 besteht, als Schweißkonstruktion zusammen mit der Halterung 30 ausgeführt sein.

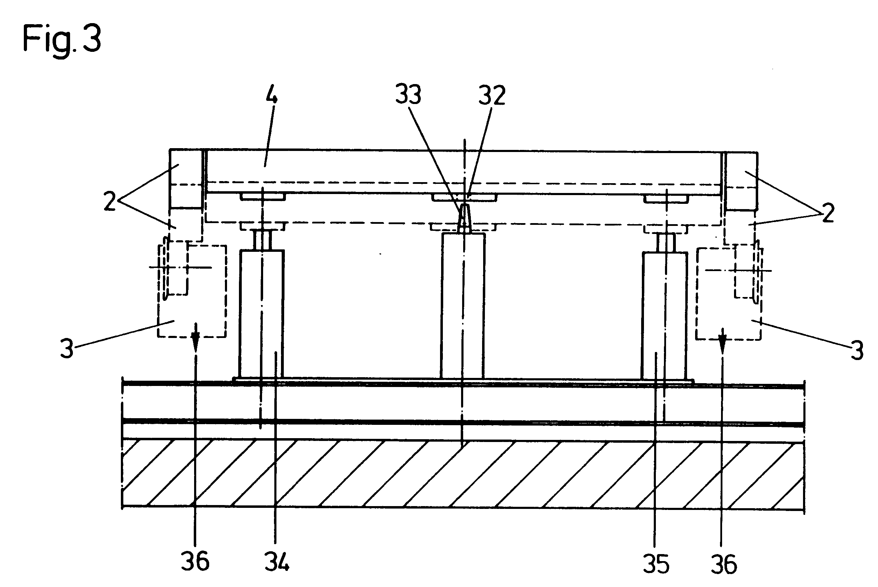

In Fig. 3 ist eine Zentrierstation dargestellt, bei der durch Absenken des Skids 2 der mit diesem in einer bestimmten Lage, jedoch schwimmend verbundene Innenrahmen 4 mit einer am Innenrahmen 4 angeordneten Zentrierbohrung 32 auf einen Zentrierdorn 33 aufgleitet. Zufolge der federnden, schwimmenden und gedämpften Beschleunigungen und Verzögerungen folgenden Aufhängung des Innenrahmens 4 geschieht eine stoßfreie Zentrierung und darüber hinaus ist ein Verkanten des Innenrahmens gegenüber dem Skid 2 im Zentrierdorn 33 und Hilfsstützen 34, 35 nicht möglich. Auch wenn sehr hohe Zentriergenauigkeiten beispielsweise plus-minus ein Zehntel Millimeter verlangt werden.

Im Ausführungsbeispiel nach Fig. 3 wird die Rollenbahn 3 in Richtung von Pfeilen 36 beim Zentrieren nach unten abgesenkt. Zufolge des mit Hilfe der Federn durchgeführten Zentriervorgangs müssen keine weiteren Zentrierhilfen an der Zentrierstation zwischen Zentrierdorn und Zentrierbohrung angebracht werden, was zu einer beachtlichen Vereinfachung und zu einer flachen Bauweise der gesamten Transferstraße führt.

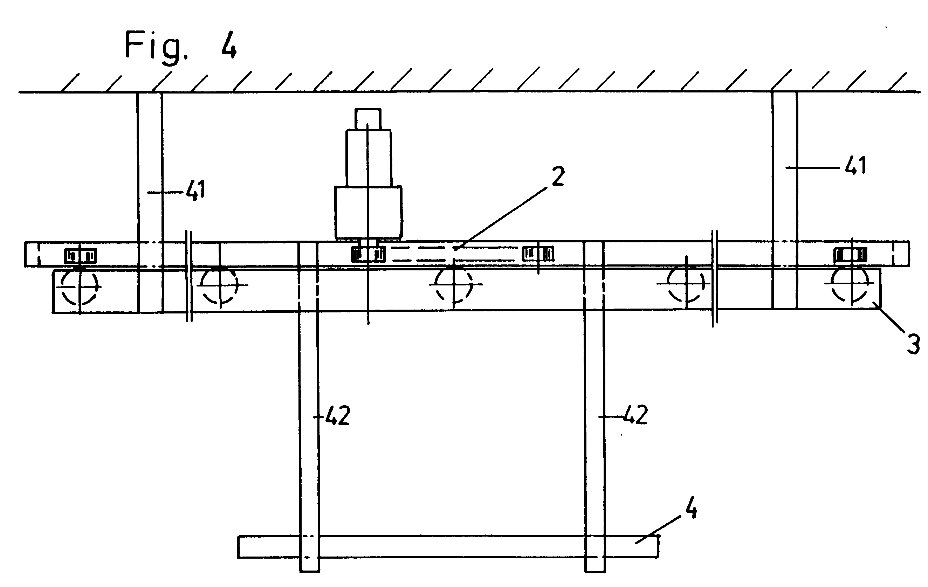

Die in Fig. 4 dargestellte hängende Anordnung der Fördereinrichtung zeigt einen Innenrahmen 4, der hängend am Skid 2 über Stützen 42 angeordnet ist, wobei die Rollenbahn 3 als Förderbahn über Deckenstützen 41 an der Decke einer Fertigungsstelle angeordnet ist.

Es ist hierbei verständlich, daß die Deckenstützen 41 an der Rollenbahn 3 außen angeordnet sind, während die den Innenrahmen 4 tragenden Stützen 42 innerhalb des Skids 2 angeordnet sind.

**Patentansprüche**

1. Verfahren zum Transportieren und Zentrieren eines auf einem antreibbaren Skid (2) befindlichen Bauteils, dadurch gekennzeichnet, daß das Bauteil im Skid (2) in einer bestimmten Bezugslage zum Skid (2) in einer federnden, dämpfend wirkeuden Halterung schwimmend gelagert ist, daß der Skid (2) über einen federnd abgestützten Pressantrieb (9, 11) in eine Zentrierstellung an die Arbeitsstation verbringbar ist, daß das Bauteil in der Arbeitsstation aus der schwimmenden Lagerung im Skid (2) in eine ortsfeste Arretierstellung überführbar ist, daß für das Bauteil nach der Bearbeitung in der Bearbeitungsstation dessen schwimmende Lagerung in einer definierten Lage zum Skid (2) wiederhergestellt wird.

2. Fördereinrichtung mit Fahrbahnen für Skids (2), integrierten Bearbeitungsstationen mit Arretiervorrichtungen für Skids (2) und einem Antrieb für Skids, dadurch gekennzeichnet, daß der Skid (2) einen Innenrahmen (4) zur Aufnahme eines zu montierenden Bauteils trägt, der Innenrahmen (4) in einer federnden dämpfend wrikeuden Halferung im Skid (2) aufgehängt ist und Zentrierungen (32) trägt, die mit den an den Bearbeitungsstationen vorhandenen Arretiervorrichtungen (33) zusammenwirken, und daß der Skid (2) zwischen mindestens einem abwälzbaren Antrieb (9) und einer gefederten abwälzbaren Gegenhalterung (11) angeordnet, angetrieben wird.

3. Fördereinrichtung nach Anspruch 2, dadurch gekennzeichnet, daß der Innenrahmen (4) einen offenen Rahmen aus Trägern (17, 18, 19) bildet, wobei die Enden (20, 21 bzw. 22, 23) der Querträger (17) sich in Förderrichtung und senkrecht hierzu in horizontaler Ebene federnd am Skid (2) abstützen, wobei mindestens drei Aufnahmen (24) zwischen Skid (2) und Innenrahmen (4) vorgesehen sind.

4. Fördereinrichtung nach Anspruch 2 und/oder 3, dadurch gekennzeichnet, daß zum Antrieb des Skids (2) von einem Motor (16) über ein Übertragungsmittel angetriebene Rollen (9) vorgesehen sind, wobei ein Kraftschluß zwischen den Rollen und der einen Längsseite (12) des Skids (2) gegen eine gegenüberliegende, sich redernd an der anderen Längsseite (13) des Skids (2) abstützende Rollvorrichtung (11) hergestellt wird.

5. Fördereinrichtung nach Anspruch 2 und/oder 3, dadurch gekennzeichnet, daß in einer Antriebsstation der Skid (2) durch einen von einem Motor (16) angetriebenen Zahnriemen angetrieben wird und bei Kraftschluß zwischen Rollen (9) und Längsseite (12) des Skids (2) gegen eine gegenüberliegende, sich federnd an der anderen Längsseite des Skids (2) abstützende Rollvorrichtung (11) angepreßt wird.

6. Fördereinrichtung nach Anspruch 4 oder 5, dadurch gekennzeichnet, daß der Antrieb (9) und die federnde Rollvorrichtung (11) in Förderrichtung gesehen, die jeweils eine der Längsseiten (12, 13) des Skids (2) während des Antriebs zwischen sich einpressen.

7. Fördereinrichtung nach Anspruch 4 oder 5, dadurch gekennzeichnet, daß der Antrieb (9) und die federnde Rollvorrichtung (11) in Förderrichtung gesehen, eine Längsseite (12 bzw. 13) des Skids (2) während des Antriebs zwischen sich von oben und unten her einpressen.

8. Fördereinrichtung nach Anspruch 3, dadurch gekennzeichnet, daß die am Skid (2) angeordneten Aufnahmen (24) gebildet sind durch federnde Seitenwände (27) zur Bewegung des Innenrahmens (4) in und entgegen der Förderrichtung durch eine konisch sich nach unten von der Innenseite des Skids (2) weg erstreckende Feder (29) als Rückwand und durch einen Aufnahmeboden (31).

9. Fördereinrichtung nach Anspruch 8, dadurch gekennzeichnet, daß die Seitenwände (27) sich nach unten konisch verjüngen und daß der Aufnahmeboden (31) eine Breite besitzt, die dem Querschnitt des Querträgers angepaßt ist.

10. Fördereinrichtung nach einem oder mehreren der vorhergehenden Ansprüche 1, 8, 9 dadurch gekennzeichnet, daß das freie, obere Ende der Aufnahmen (24) mit einer am Skid (2) befindlichen Halterung (30) verschraubt ist.

11. Fördereinrichtung nach einem oder mehreren der vorhergehenden Ansprüche 3, 8, 9, dadurch gekennzeichnet, daß die Aufnahmen (24) einschließlich Halterung (30) als Schweißkonstruktion ausgebildet sind und mit dem Skid (2) verschraubt sind.

12. Fördereinrichtung nach einem oder mehreren der vorhergehenden Ansprüche 3, 8, 9, dadurch gekennzeichnet, daß die Aufnahmen (24) einschließlich Halterung (3) als Schweißkonstruktion ausgebildet sind und mit dem Skid verschweißt sind.

13. Fördereinrichtung nach einem oder mehreren der vorhergehenden Ansprüche, dadurch gekennzeichnet, daß der Innenrahmen (4) zusätzliche Versteifungen (19) trägt.

14. Fördereinrichtung nach einem oder mehreren der vorhergehenden Ansprüche, dadurch gekennzeichnet, daß der Skid (2) Laufrollen (25) trägt.

15. Fördereinrichtung nach einem oder mehreren der vorhergehenden Ansprüche, dadurch gekennzeichnet, daß der Skid (2) seitliche zur Anlage an die Fahrbahn kommende Führungsrollen (7) trägt.

16. Fördereinrichtung nach einem oder mehreren der vorhergehenden Ansprüche, dadurch gekennzeichnet, daß die Fahrbahn seitlich Führungsrollen (7) für den Skid (2) trägt.

## Claims

1. A method of transporting and centering a member on a drivable skid (2), characterised in that the member is supported in the skid (2) floating in a specific position relative to the skid in a damped sprung support, that the skid (2) can be brought into a centering position at the work position via a press drive (9,11) which is spring supported, that the member at the work position can be transferred from the floating support in the skid (2) into a fixed stop position, (and) that for the member, following the treatment in the treatment position, its floating support in a specific position relative to the skid (2) is re-established.

2. A transport apparatus with rails for skids (2), integrated treatment positions with stop devices for skids (2) and a drive for skids, characterised in that the skid (2) has an inner frame (4) for receiving a member to be mounted, the inner frame (4) is hung in a damped sprung support in the skid (2) and has centering devices (32) which cooperate with stop devices (33) present at the treatment positions, and that the skid (2), arranged between at least one hobbing drive (9) and a sprung hobbing counter support (11), is driven.

3. Transport device according to Claim 2, characterised by the fact that the inside frame (4) forms an open frame consisting of supports (17, 18, 19), where the ends (20, 21 or 22, 23) of the transverse supports (17) are supported by springs on skid (2) in the direction of transport and at right angles to this in the horizontal plane, where at least three mountings (24) are provided between the skid (2) and the inside frame (4).

4. Transport device according to Claim 2 and or 3, characterised by the fact that rollers (9) driven by a means of transmission from a motor (16) are provided to drive the skid (2), where force locking is created between the rollers and one longitudinal side (12) of skid (2) against an opposite rolling device (11) supported by springs on the other longitudinal side (13) or skid (2).

5. Transport device according to Claim 2 and/or 3, characterised by the fact that in one drive station of the skid (2) there is a drive from a toothed belt driven by a motor (16) and the longitudinal side (12) of the skid (2) is pressed against an opposite rolling device (11) supported by springs on the other longitudinal side of skid (2).

6. Transport device according to Claim 4 or 5, characterised by the fact that the drive (9) and the spring rolling device (11), seen in the direction of transport, press one of the longitidinal sides (12,13) of the skid (2) between them during the drive.

7. Transport device according to claim 4 or 5, characterised by the fact that the drive (9) and the sprung rolling device (11), seen in the direction of transport, press one longitudinal side (12 or 13) of the skid (2) between them from above and below during the drive.

8. Transport device according to Claim 3, characterised by the fact that the mountings (24) situated on skid (2) are formed by sprung side walls (27) for moving the inside frame (4) into and in opposition to the direction of transport by a spring (29) extending conically from below from the inside of the skid (2) as a back wall and through a mounting floor (31).

9. Transport device according to Claim 8, characterised by the fact that the side walls (27) narrow conically downwards and that the mounting floor (31) has a width which is matched to the cross-section of the transverse support.

10. Transport device according to one or more of the previous claims 1, 8 and 9, characterised by the fact that the free upper end of the mountings (24) is screwed to a support (30) situated on skid (2).

11. Transport device according to one or more of the previous claims 3, 8 and 9, characterised by the fact that the mountings (24) including the support (30) are made as a welded structure and are screwed to skid (2).

12. Transport device according to one or more of the previous claims 3, 8 and 9, characterised by the fact that the mountings (24) including the support (30) are made as a welded structure and are welded to the skid.

13. Transport device according to one or more of the previous claims, characterised by the fact that the inside frame (4) carries additional stiffeners (19).

14. Transport device according to one or more of the previous claims, characterised by the fact that skid (2) carries running rollers (25).

15. Transport device according to one or more of the previous claims, characterised by the fact that skid (2) carries guide rollers (7) which make side contact with the track.

16. Transport device according to one or more of the previous claims, characterised by the fact that the track has guide rollers (7) for the skid (2) at the side.


**Revendications**

1. Procédé de transport et de centrage d'une pièce se trouvant sur un patin (2) entraîné, caractérisé en ce que la pièce est placée, de façon flottante dans une fixation jouant le rôle d'amortisseur élastique, dans le patin (2) dans une position relative déterminée par rapport au patin (2), en ce que le patin (2) peut être amené à la station de travail, dans une position de centrage, au moyen d'un mécanisme d'entraînement à pression en appui élastique (9, 11), en ce que la pièce peut être amenée, dans la station de travail, de l'appui flottant dans le patin (2) à une position de blocage fixe, en ce que, pour la pièce, après l'usinage dans la station de travail, son placement flottant peut être rétabli dans une position définie par rapport au patin (2).

2. Dispositif de transport comportant des voies de transport pour des patins (2), des stations de travail intégrées comportant des dispositifs de blocage pour les patins (2), et un mécanisme d'entraînement des patins, caractérisé en ce que le patin (2) comporte un châssis intérieur (4) pour recevoir une pièce à monter, le châssis intérieur (4) est suspendu dans une fixation élastique jouant le rôle d'amortisseur élastique dans le patin (2) et comporte des centrages (32) qui coopèrent avec les dispositifs de blocage (33) présents aux stations d'usinage, et en ce que le patin (2) est entraîné en étant placé entre au moins un mécanisme d'entraînement roulant (9) et un contre-appui suspendu élastiquement pouvant rouler (11).

3. Dispositif de transport selon la revendication 2, caractérisé en ce que le châssis intérieur (4) constitue un châssis ouvert comprenant des longerons et traverses (17, 18, 19), les extrémités (20, 21, respectivement 22, 23) des traverses (17) s'appuyant dans la direction de transport et orthogonalement à celle-ci, dans un plan horizontal, élastiquement sur le patin (2), au moins trois logements (24) étant prevus entre le patin (2) et le châssis intérieur (4).

4. Dispositif de transport selon la revendication 2 et/ou 3, caractérisé en ce que, pour l'entrainement du patin (2), il est prévu des rouleaux (9) entraînés par un moteur (16) par l'intermédiaire d'un moyen de transmission, un appui forcé étant établi entre les rouleaux et l'un des grands côtés (12) du patin (2) contre un dispositif à rouleaux (11) opposé s'appuyant élastiquement sur l'autre grand côté (13) du patin (2).

5. Dispositif de transport selon la revendication 2 et/ou 3, caractérisé en ce que, dans une station d'entrainement, le patin (2) est entraîné par une courroie dentée entrainée par un moteur (16) et, en cas d'appui entre les rouleaux (9) et le grand côté (12) du patin (2), il est appuyé contre un dispositif à rouleaux (11) opposé, s'appuyant élastiquement sur l'autre grand côté du patin (2).

6. Dispositif de transport selon la revendication 4 ou 5, caractérisé en ce que le mécanisme d'entrainement (9) et le dispositif à rouleaux à ressort (11) enserrent entre eux, dans le sens de transport, chaque fois l'un des grands côtés (12, 13) du patin (2) pendant l'entrainement.

7. Dispositif de transport selon la revendication 4 ou 5, caractérisé en ce que le mécanisme d'entrainement (9) et le dispositif à rouleaux à ressort (11) enserrent entre eux, dans le sens de transport, un grand côté (12 ou 13) du patin (2) pendant l'entrainement par le haut et par le bas.

8. Dispositif de transport selon la revendication 3, caractérisé en ce que les logements (24) placés sur le patin (2) sont constitués par des parois latérales élastiques (27) pour déplacer le châssis intérieur (4) dans le sens de transport et en sens opposé par un ressort (29) s'étendant coniquement vers le bas à partir de la face intérieure du patin (2), constituant une paroi postérieure, et par un fond de logement (31).

9. Dispositif de transport selon la revendication 8, caractérisé en ce que les parois latérales (27) s'amincissent coniquement vers le bas, et en ce que le fond de logement (31) présente une largeur adaptée à la section droite de la traverse.

10. Dispositif de transport selon une ou plusieurs des revendications précédentes 1, 8, 9, caractérisé en ce que l'extrémité supérieure libre des logements (24) est vissée avec une fixation (30) se trouvant sur le patin (2).

11. Dispositif de transport selon une ou plusieurs des revendications précédentes 3, 8, 9, caractérisé en ce que les logements (24) sont réalisés sous la forme d'une construction soudée, y compris la fixation (30) et sont vissés avec le patin (2).

12. Dispositif de transport selon une ou plusieurs des revendications précédentes 3, 8, 9, caractérisé en ce que les logements (24) sont réalisés, y compris la fixation (30) sous la forme d'une construction soudée et sont soudés au patin.

13. Dispositif de transport selon une ou plusieurs des revendications précédentes, caractérisé en ce que le châssis intérieur (4) comporte des renforcements supplémentaires (19).

14. Dispositif de transport selon une ou plusieurs des revendications précédentes, caractérisé en ce que le patin (2) comporte des rouleaux de roulement (25).

15. Dispositif de transport selon une ou plusieurs des revendications précédentes, caractérisé en ce que le patin (2) comporte des rouleaux de guidage (7) latéraux devant entrer en contact avec la voie de transport.

16. Dispositif de transport selon une ou plusieurs des revendications précédentes, caractérisé en ce que la voie de transport comporte latéralement des rouleaux de guidage (7) pour le patin (2).

Fig. 1a

Fig. 1b

EP 0 191 116 B2

Fig. 2a

Fig. 2b

EP 0 191 116 B2

Fig. 2c

Fig. 2d

Fig.3

Fig. 4